# EUROPEAN PATENT SPECIFICATION

(11) **EP 2 613 932 B1**
(45) Date of publication and mention of the grant of the patent: **19.04.2017**
(21) Application number: 11752557.6
(22) Date of filing: 08.09.2011
(51) Int. Cl.: B30B 9/30, F16P 3/08, E05F 15/70

(54) **AN AUTOMATIC DOOR FOR A BALER**
AUTOMATISCHE TÜR FÜR EINE BALLENPRESSE
PORTE AUTOMATIQUE POUR PRESSE À BALLES

(30) Priority: 09.09.2010 EP 10009383
(43) Date of publication of application: 17.07.2013
(73) Proprietor: Bramidan A/S, 6740 Bramming (DK)
(72) Inventor: CHRISTENSEN, Ejnar, Christian, DK-6800 Varde (DK); KNUDSEN, Brian, Kristian, DK-6261 Bredebro (DK)
(74) Representative: Zacco Denmark A/S
(86) International application number: PCT/EP2011/065551
(87) International publication number: WO 2012/032115

(56) References cited:
- EP-A1- 1 048 449
- EP-A1- 2 138 661
- EP-A2- 0 865 901
- WO-A1-2005/058092
- DE-A1-102004 030 489
- DE-U1- 20 000 575
- US-A1- 2010 174 447

## Description

The invention relates to an automatic door primarily for use in a vertical baler.

### Background

The use of cardboard boxes, plastic bags, plastic wrapping and the like for packaging, storage and transporting of e.g. food products and staple goods is widely known in the industry. After use of the storage and packaging materials, they are normally disposed or recycled. For an easy handling of these waste products, vertical balers are commonly used to create compacted bales by pressing all extra air inside e.g. the cardboard out. A vertical baler normally comprises a chamber with a ram which compacts the waste product placed therein. The waste product is placed in the chamber through a door located at the upper part of the baler. After closing this door, the ram can be activated, whereby it compacts the waste product by pressing the product from the top and downwards. The compacted bale of waste material can subsequently be subtracted from a second door placed at the lower part of the baler. In some balers, the upper door will automatically open, when the lower door is opened as the two share a common frame.

The upper door for depositing the waste into the baler can be opened in different ways, e.g. manually by a handle whereby the door connected to the side of the baler swings open either sideways or upwards into the room. This type of solution is space consuming and can be inconvenient for the user, as the door is often at heads level and one therefore needs to bend down to avoid the door.

Alternatively, the upper door can open and close by sliding downwards on the outside of the lower door. Thus, it is a solution which takes up a lower amount of space. The process of sliding the upper door downwards for opening is often automatically activated by gravity.

Upon closing the door there is a risk that the user can get his/hers hand caught in between the frame of the baler and the door, if e.g. he/she tries to put in or remove extra waste as the door is closing. As there is an increasing focus on safety at working places, these commonly used upper doors can be problematic.

EP1048449 and EP0865901 disclose manually operated doors for a baler. The documents further discloses security systems for a baler, that prevents the ram of the baler from being activated if the door is open.

However, a user still runs the risk of getting his/her hand caught in between the frame of the baler and the door.

DE20000575 discloses a hydraulic automatic door for a baler, where the baler comprises a control system that initiates the movement of the ram if the pressure increases inside a hydraulic cylinder driving the automatic door, as normally occurs when the door is fully closed. However, the pressure inside the hydraulic cylinder driving the automatic door may also increase if a user gets his/her arm caught in the automatic door. This may present a serious security risk.

Thus remains a problem to provide a secure automatic door for a baler.

The problem is solved by a baler in accordance with the features of claim 1.

### Description of the invention

Disclosed herein is a vertical baler for making bales of a waste material such as e.g. cardboard or plastic by compacting said waste material in a chamber, said vertical baler comprising an automatic door adapted for automatically sliding in opposite directions for respectively closing and opening access to a chamber. Said automatic door comprises 1) an inner door, 2) a cover at least partly covering said inner door, 3) a flexible member connecting said inner door and said cover for obtaining said distance, and 4) detecting and activation means comprising actuator means in connection with the cover, and initiation means, and a detection button in connection with the inner door.

Said cover is at a distance displaced relative to said inner door when said inner door and said cover are sliding together in opposite directions for respectively closing and opening access to the chamber, wherein said distance between said cover and said inner door is in said sliding direction for closing access to said chamber.

Said flexible member is connecting said inner door and said cover so that said cover is at said displaced distance relative to said inner door and allows said distance between said cover and said inner door to be changed.

Said detecting and actuator means is configured to detect when said distance between said inner door and said cover is decreased, such that the initiation means is activated when the cover is pushed downwards such that the distance between the cover and the inner door decreases which allows for the actuator means to get in contact with the detection button.

The detecting and actuator means further is configured to send a signal if said distance is decreased between said inner door and said cover, wherein said signal tricks an alarm, stops the movement of the door at the current position of the door and/or moves the door to a predetermined position.

By a flexible member connecting said inner door and said cover is also included that the cover e.g. is resting on top of the flexible member.

The automatic door can in examples not covered by this invention slide in different directions, both horizontally, and/or at an angle as long as the two sliding directions are in opposite directions.

By the above, is thereby obtained an automatic door, which can easily be affected by changing the distance between the cover and the inner door. Hence, a user does not need to affect the inner door directly in order to make the door e.g. move in the different direction or stop. This is advantageous when the automatic door is used in a vertical baler, where the inner door is normally a heavy door, which is not sensitive to touch from a user as it is constructed to withhold an amount of pressure inside the chamber during operation of the baler. The flexible member used in the door can have a variety of different designs, e.g. it can be a spring or an elastic material, as long as it allows for the distance between the cover and the inner door to be changed.

The detecting and actuator means is adapted for changing the sliding direction when said distance between said inner door and said cover is decreased. Thus, if the distance between the inner door and the cover is changed as the automatic door is closing, the detector means can change the sliding direction thereby opening the door again. This is advantageous from a safety point of view, as it can thereby be avoided that a user gets e.g. his/hers fingers squished in between the door and e.g. the frame surrounding the door or an opposite door.

In one or more embodiments said flexible member is a spring element, which ensures that the initial distance between the inner door and the cover is restored when the door is not affected by the user anymore.

In one or more embodiments said inner door is connected to said cover using a flexible member allowing said inner door to be angled relative to said cover during sliding in said opposite directions. Thereby, when the door is closed it can be positioned parallel to a neighbouring plate element together with which the door generates a plane surface on at least one side. Further, because of the angling during opening and closing, the inner door can slide behind e.g. an extra cover plate positioned parallel to the neighbouring plate and hence only generate the plane surface with the neighbouring plate when the inner door has passed the latter.

In one or more embodiments at least part of said cover is resting on top of at least part of said flexible member. Hence, in a baler, the user can hold the cover by hand at a given position while the inner door moves downwards. This ensures that the user cannot get his/hers fingers stuck between the cover for the inner door and a cover for the lower door as the automatic door slides up and down. This is highly advantageous from a safety point of view.

In one or more embodiments said cover is L-shaped covering the top and the front of said inner door. This ensures that mechanical machinery positioned e.g. on the inner door can be hidden behind the cover, thereby reducing the risk of anyone getting body parts caught in the machinery at the same time as improving the aesthetical appearance of the door. Further, when the cover is L-shaped it is possible to change the distance between the cover and the inner door by pushing the cover partly from the side and thus not only at the top of the cover. When the door is used in a baler, this means that e.g. the closing of the automatic door can be stopped by pushing the cover from the side.

In one or more embodiments said cover is made from a plate. By using a plate, the weight of the cover can be kept low, which reduces the demands to the flexible member, e.g. a spring. By using a plate, it is further easier to control the amount of influence required to change the distance between the cover and the inner door. It can e.g. be enough for the user to touch the light cover in order to make the heavier inner door e.g. slide in the opposite sliding direction. Further, with a plate as cover, the cover can easily be held by hand power by the user.

In one or more embodiments said cover is a light weight material, such as e.g. aluminium or plastic, yielding a light weight cover.

In one or more embodiments said inner door is made from steel, yielding a heavy door which e.g. can withstand the pressure from waste material and a ram inside a baler during operation.

In one or more embodiments said automatic door further comprises a lower door where in front the inner door can slide. The lower door and the automatic door can be one integrated unit, which can open together or alternatively, the two doors can both open individually of one another.

In some embodiments, the cover is along a first axis directly mechanically coupled to the inner door by said flexible member so that a translation of the inner door in a direction along said first axis is follow by a correspondingly translation of the covers along said first axis.

The flexible member may allow the inner door to move independently of the cover along a second axis, wherein the second axis is perpendicular to the first axis.

In some embodiments, the weight of the cover is substantially lighter than the weight of the inner door.

In some embodiments, the weight of the cover is no more than 90%, 80%, 70%, 60%, 50%, 25% or 15% of the weight of the inner door.

In some embodiments, the cover is guided by a frame, whereby the cover is limited to move along a single axis inside said frame.

In some embodiments, the cover comprise a first surface, wherein the widest width of the first surface is at least 25%, 50%, 75%, 90% or 95% of the widest width of the inner door.

In some embodiments, said first surface faces at least partly in the closing direction of the automatic door.

In some embodiments, said first surface faces in the closing direction of the automatic door.

In some embodiments, the first surface is substantially non-deformable.

In some embodiments, the cover further comprises a second surface, wherein said second surface faces away from the chamber.

In some embodiments, the first surface of the cover is perpendicular to the second surface of the cover.

### Brief description of the drawings

Figures 1a-b illustrate the principles of a baler.
Figures 2a-c illustrate simplified embodiments of the automatic door according to the invention.
Figures 3a-c illustrate an embodiment of the automatic door in different positions.
Figures 4a-c illustrate a more detailed view of the embodiment shown in figures 3a-c, whereas figure 4d shows a close up of the detector.
Figures 5a and 5b illustrate a detailed view of an embodiment of the detector in the deactivated and the activated position, respectively.
Figure 6a-d illustrate a baler with an automated door according to the invention displayed in different positions from completely closed to fully opened.

### Description of preferred embodiments

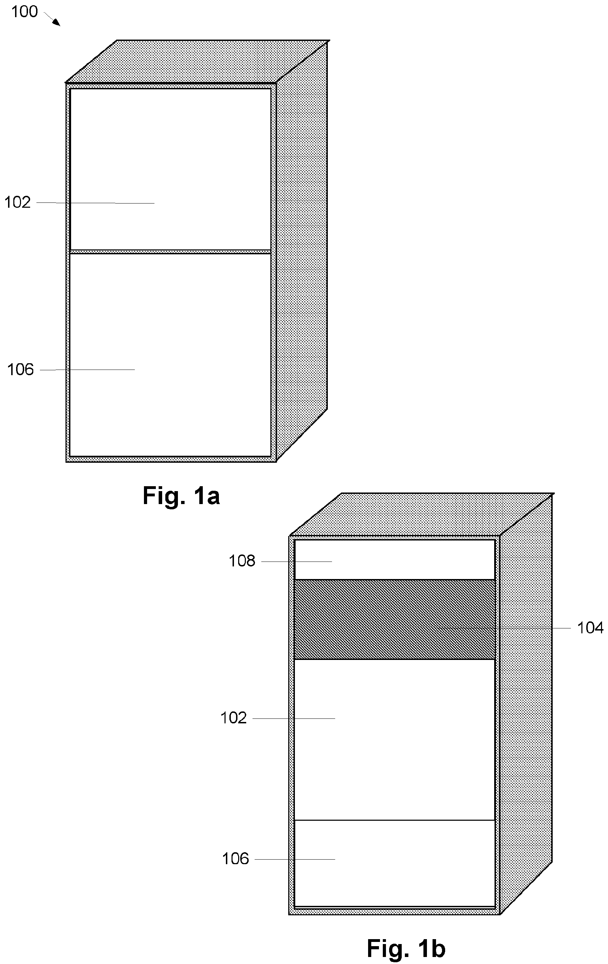

Figures 1a-b schematically illustrate a baler 100 comprising an upper automatic door 102 for disposing the waste into a chamber 104 inside the baler 100. In figure 1a, the upper automatic door 102 is closed, whereas it is partly opened in figure 1 b. The baler 100 further comprises a lower door 106 and a ram 108 inside the chamber 104 for compacting the waste. The ram 108 is situated at the top of the chamber 104 and spans the area inside the chamber horizontally, nearly covering the entire area. The lower 106 and the upper door 102 are integrated into one unit by a common frame, and said unit can be opened for subtracting the waste from the baler 100. In an alternative embodiment of the invention, the lower door 106 can be opened outwards separately.

The operating principles behind the baler 100 is in short as follows; a user disposes waste, e.g. cardboard, carton, paper, plastic and the like, through the upper door 102. Normally this door is opened, as it can be inconvenient for the user having to press a button opening the baler before being able to dispose his/hers hand full of waste into the baler. By pressing a button (not shown), the upper door 102 closes, where after the ram 108 inside the chamber 104 moves from its resting position at the top of the chamber 104 downwards towards the bottom of the chamber 104 compacting the waste material. After the waste has been compacted, the ram 108 returns to its top resting position and the upper door 102 returns to its open position. The user can subsequently add more waste and repeat the compaction process. The baler might also have additional buttons having e.g. a function of individually closing the inner door, for activating the ram, or for opening the inner door. When the bale of compacted material fills the space behind the lower door 106, the two doors (the upper door 102 and the lower door 106) are opened and the compacted waste removed.

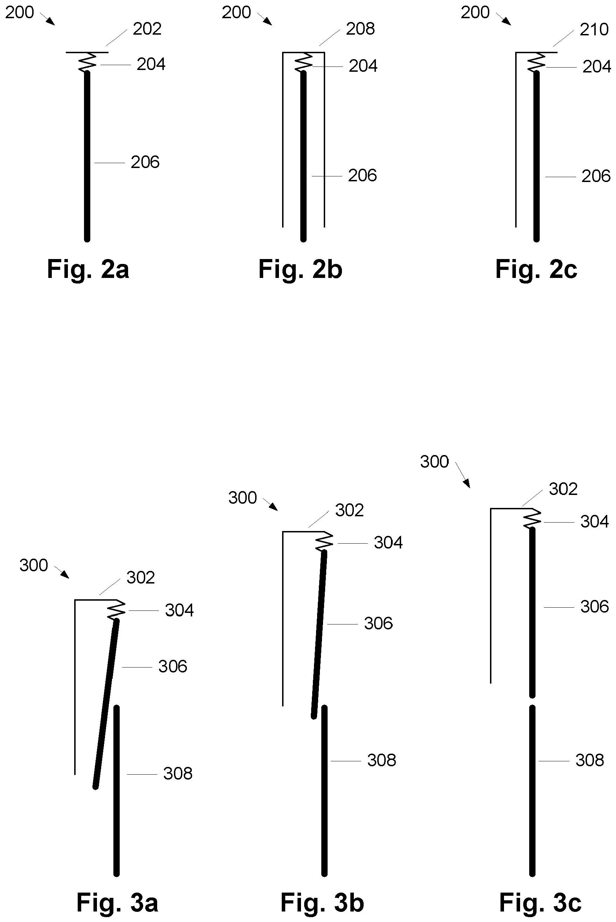

Figures 2a-c illustrate simplified embodiments of the upper automatic door 102 of figures 1a-b where the detecting and activation means is not shown. The automatic door 200 comprising a cover 202 and a flexible member 204 connecting the cover 202 to an inner door 206. In the automatic door 200 in figure 2a, the cover 202 is only spanning the top of the inner door 206, whereas the cover 208 is covering three of the sides of the inner door 206 in figure 2b. The L-shaped cover 210 in figure 2c is covering two of the sides of the inner door 206. In the figures, the flexible member 204 is shown as a spring, but other options such as e.g. an elastic material could also be used.

Figures 3a-c illustrate an embodiment of the automatic upper door 300 in a baler where the detecting and activation means is not shown. The door 300 is shown in a semi-opened, a nearly closed, and a completely closed position in figures 3a, 3b, and 3c, respectively. The cover 302 is L-shaped and the flexible member 304 is a spring. When the inner door 306 opens, it slides over and along downside a lower door 308 of the baler.

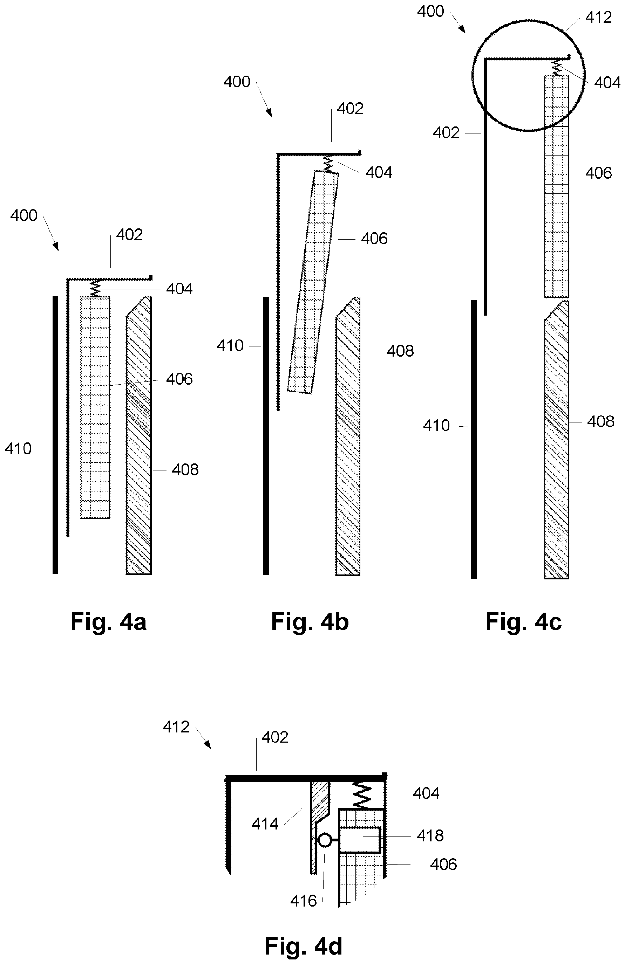

Figures 4a-c illustrate a more detailed view the automatic door 400 shown in figures 3a-c, wherein the cover 402 is L-shaped and the flexible member 404 connecting the cover 402 and the inner door 406 is a spring. In figure 4a the door 400 is shown in a fully opened position, in figure 4b the door 400 is in a partly opened position, and in figure 4c the door 400 is completely closed. When the door 400 is fully opened, the inner door 406 is positioned alongside and parallel with the lower door 408 in the baler. The baler further comprises a second cover 410 for protecting both the lower door 408 and the upper door 400. The second cover 410 is placed such that it covers both the upper door 400 as it slides down in between the second cover 410 and the inner door 408, when the door 400 opens. The lower door 408 and the upper door 400 can be two separates doors, but also be integrated into one door by a common frame framing both the upper door 400 and the lower door 408.

When compacting waste material using the baler, it is essential that the inner door 406 and the lower door 408 are completely aligned vertically along the inner surface of the chamber inside the baler thereby forming a flat surface in a closed position as shown in figure 4c. Otherwise, the waste can get stuck between the inner door 406 and lower door 408 and the compaction process will most likely stop. Further, as there are strong forces pressing against the surfaces of the chamber when the ram compacts the waste material, it is essential both the inner door 406 and the lower door 408 are constructed from a strong material, e.g. steel, which can withhold the pressure. Contrary, as the two covers 402, 410 are not withholding the pressure from the waste material and the ram during the compaction process, they can with advantage be thin compared to the doors 406, 408 and be e.g. a plate of a light material such as e.g. aluminium or plastic.

The inner door 406 can move relative to the cover 402 in the horizontal plane. This is seen clearly in figure 4a showing the door 400 in the fully opened position where the inner door 406 and the flexible member 404 is displayed horizontally compared to the door 400 in the fully closed position shown in figure 4c. This ensures that the inner door 406 can be aligned and slide down along and parallel with the lower door 408 when opening and still be aligned vertically with the lower door 408 when closed, thereby forming a flat surface inside the chamber in the baler.

In figure 4c, the circle 412 marks the close up of the detection and activation mechanism shown in figure 4d. The door is activated when the cover 402 is pushed downwards such that the distance between the cover 402 and the inner door 406 decreases. The actuator means 414 thereby comes in contact with a detection button 416 and an initiation means 418 is activated. The initiation means 418 can cause the door to stop, slide downwards and/or send a warning signal.

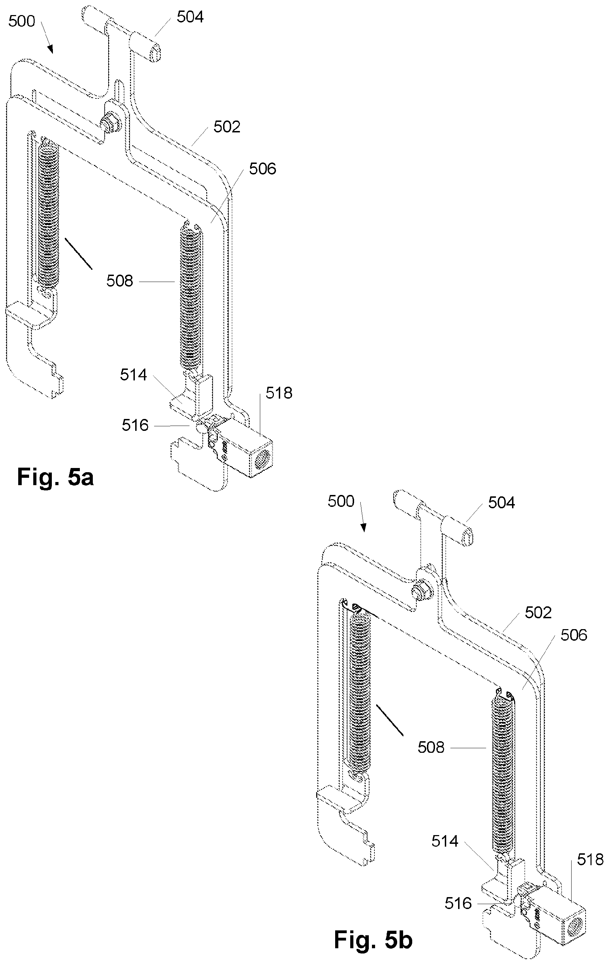

Figures 5a and 5b illustrate a detailed view of an embodiment of the detector means 500 in the automated door in the deactivated and the activated position, respectively. The detector means 500 comprises a cover support rod 502 shaped as a T at the top 504. The ends of the T are normally covered with rubber and upon the top 504, the cover 402 (not shown) rests. The cover support rod 502 is connected to the inner door support rod 506 by a set of springs 508. The bottom of the springs 508 are connected to the cover support rod 502, whereas the top of the springs 508 are connected to the inner door support rod 506.

If the cover is blocked, e.g. by the user pressing his/hers hand on the cover, the cover support rod 502 is pushed downwards whereby the springs 508 are stretched. This allows for the actuator means 514 on the cover support rod 502 to get in contact with the detection button 516 on the inner door support rod 506 which in turn activates an initiation means 518, e.g. a switch. The initiation means 518 thereafter sends a signal e.g. to a motor, which ensures that the inner door returns to the completely open position. Alternatively, instead of returning the door to the open position, the initiation means 518 could send a signal which tricks an alarm, stops the movement of the door at the given position or moves the door to a different pre-determined position, for example a half open position.

In some embodiments, the automatic door further comprises a second detection means configured to detect when the distance between the inner door and the cover is decreased. Thereby a more reliable detection system is provided. The second detection means may comprise a second actuator means, a second detection button and a second initiation means e.g. positioned on the opposite side of the cover support rod 502 shown in Fig. 5, compared to the shown actuator means 514, detection button 516 and initiation means 518.

If the cover is constructed from a light material, e.g. aluminium or plastic, and at the same time is resting on the top of the cover support rod 502, one can hold the cover by hand at a given position while the inner door moves downwards. This ensures, that the user cannot get his/hers fingers stuck between the cover for the inner door and the cover for the lower door, as the automatic door slides up and down. This is highly advantageous from a safety point of view.

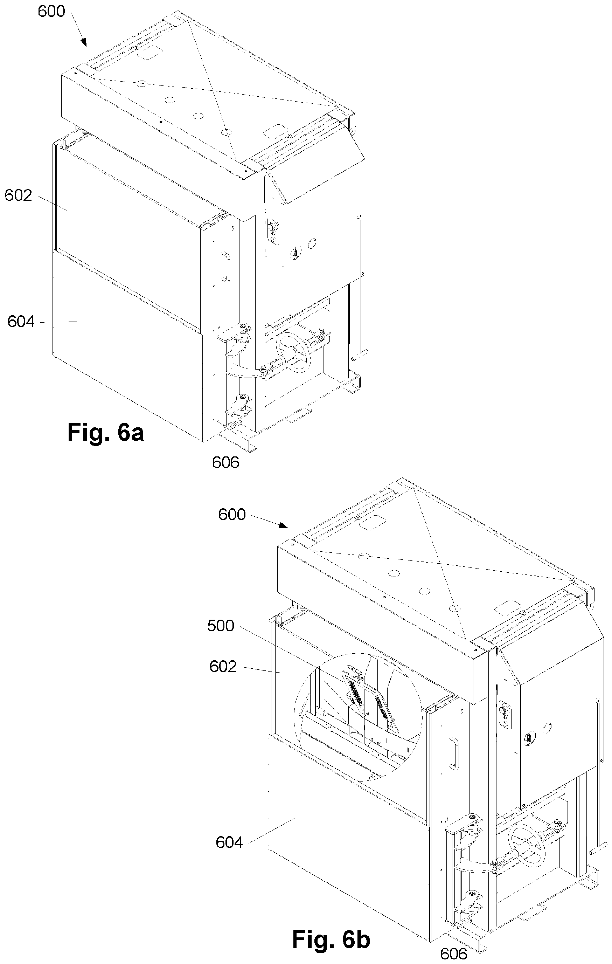

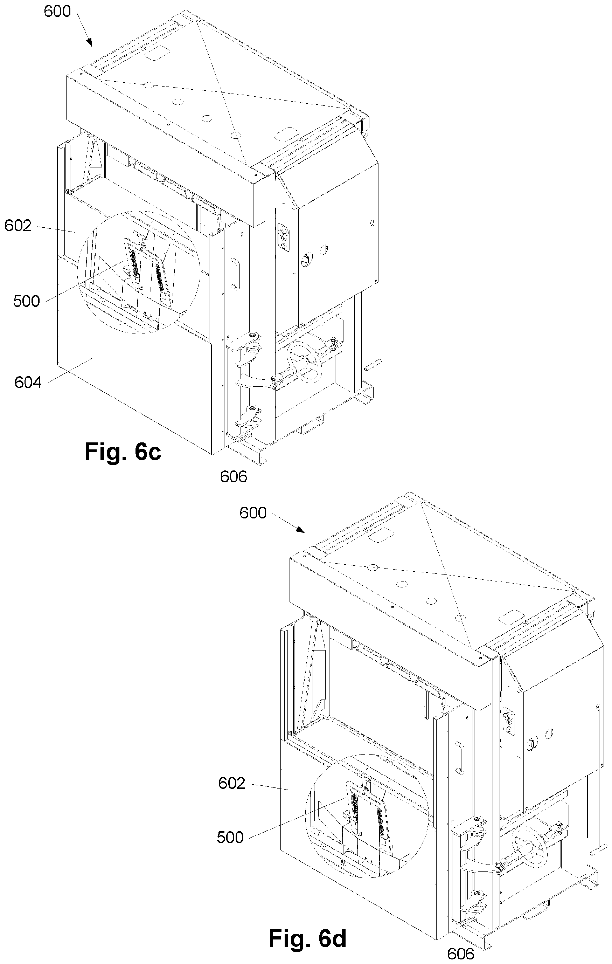

Figures 6a-d illustrate a baler 600 comprising an automatic door 602 and a lower door with a front cover 604. In figures 6a and 6b, the door 602 is displayed in the completely closed position, whereas figure 6c shows the door 602 in a partly opened position and figure 6d shows the door in a completely opened position. The lower door and the upper door 602 are integrated into one unit by a common frame 606, and said unit can be opened for subtracting the waste from the baler 600. In an alternative embodiment of the invention, the lower door can be opened outwards separately.

The automatic door 602 is operated by pushing a button, whereby 1) the upper automatic door 602 slides from its fully opened resting position to a closed position, 2) the ram compacts the waste material, and 3) the upper door 602 returns to its resting position, allowing the user to add more waste into the baler. Hence, it does not require the user to use hand power to move the heavy door normally made of steel.

The circle in figures 6b-d is a view inside the cover into the deactivated detector means 500 as described in figures 5a-b. The bottom of the detector means 500 and the inner door move in the horizontal plane relative to the inner door cover as the door moves from the opened to the closed position and back. This ensures that 1) the inner door is aligned vertically with the lower door in the closed state forming a flat surface inside the chamber as shown in figure 4c, and 2) the inner door can slide down to a position between the lower door cover plate 604 and the lower door, thereby hanging parallel with both of them as shown in figure 4a.

### References

- 100: Baler
- 102: Upper automatic door
- 104: Chamber inside the baler
- 106: Lower door
- 108: Ram

- 200: A first embodiment of the invention
- 202: First embodiment of the cover
- 204: Spring
- 206: Inner door
- 208: Second embodiment of the cover
- 210: Third embodiment of the cover

- 300: The inner door in a first position
- 302: Cover
- 304: Spring
- 306: Inner door
- 308: Lower door

- 400: The inner door in a first position
- 402: Cover
- 404: Spring
- 406: Inner door
- 408: Lower door
- 410: Second cover
- 412: Close up of the detecting means in the door
- 414: Actuator means
- 416: Detection button
- 418: Initiation means

- 500: Detector means, deactivated position
- 502: Cover support rod
- 504: T-shaped end of the detector
- 506: Inner door support rod
- 508: Springs
- 514: Actuator means
- 516: Detection button
- 518: Initiation means

- 600: Baler
- 602: Upper automated door
- 604: Lower door with front cover
- 606: Frame framing the upper and the lower door

## Claims

1. A vertical baler for making bales of a waste material, such as e.g. cardboard or plastic, by compacting said waste material in a chamber, said vertical baler comprising an automatic door adapted for automatically sliding in opposite directions for respectively closing and opening access to the chamber, wherein said automatic door comprises:
- an inner door (406);
- a cover (402) at least partly covering said inner door (406);
- a flexible member (404, 508), and
- detecting and activation means (412, 500) comprising:
o actuator means (414, 514) in connection with the cover (402), and
o initiation means (418, 518), and a detection button (416, 516) in connection with the inner door (406),
wherein said cover is at a distance displaced relative to said inner door when said inner door and said cover are sliding together in opposite directions for respectively closing and opening access to the chamber,
wherein said distance between said cover and said inner door is in said sliding direction for closing access to said chamber;
wherein said flexible member:
- is connecting said inner door and said cover so that said cover is at said displaced distance relative to said inner door;
- allows said distance between said cover and said inner door to be changed,
wherein said detecting and actuator means (412,500,414,514) is configured to detect when said distance between said inner door (406) and said cover (402) is decreased, such that the initiation means (418, 518) is activated when the cover (402) is pushed downwards such that the distance between the cover and the inner door decreases which allows for the actuator means (414, 514) to get in contact with the detection button (416, 516), and
wherein the detecting and actuator means further is configured to send a signal if said distance is decreased between said inner door and said cover, wherein said signal tricks an alarm, stops the movement of the door at the current position of the door and/or moves the door to a predetermined position.

2. A vertical baler according to claim 1, wherein said detecting and actuator means is adapted for changing the sliding direction when said distance between said inner door and said cover is decreased.

3. A vertical baler according to any of the preceding claims, wherein said flexible member is a spring element.

4. A vertical baler according to any of the preceding claims, wherein said inner door is connected to said cover using a flexible member allowing said inner door to be angled relative to said cover during sliding in said opposite directions.

5. A vertical baler according to any of the preceding claims, wherein at least part of said cover is resting on top of at least part of said flexible member.

6. A vertical baler according to any of the preceding claims, wherein said cover is L-shaped covering the top and the front of said inner door.

7. A vertical baler according to any of the preceding claims, wherein said cover is made from a plate.

8. A vertical baler according to any of the preceding claims, wherein said cover is a light weight material, such as e.g. aluminum or plastic.

9. A vertical baler according to any of the preceding claims, wherein said cover comprise a first surface, wherein the widest width of the first surface is at least 25%, 50%, 75%, 90% or 95% of the widest width of the inner door.

10. A vertical baler according to claim 9, wherein said first surface is substantially non-deformable.

11. A vertical baler according to claim 9 or 10, wherein said cover comprises a second surface and wherein said first surface faces in the closing direction of the automatic door and said second surface faces away from the chamber.

12. A vertical baler according to any of the preceding claims, wherein said inner door and said lower door are made from steel.

13. A vertical baler according to any of the preceding claims, wherein said automatic door further comprises a lower door where in front the inner door can slide.

14. A vertical baler according to any of the preceding claims further comprising a ram positioned inside said chamber, said ram being adapted for compacting waste.

## Patentansprüche

1. Vertikale Ballenpresse zur Herstellung von Ballen aus einem Abfallmaterial, wie beispielsweise Karton oder Kunststoff, durch Komprimieren des Abfallmaterials in einer Kammer, wobei die vertikale Ballenpresse eine automatische Tür aufweist, die zum automatischen Gleiten in entgegengesetzte Richtungen für das Schließen bzw. Öffnen des Zugangs zur Kammer ausgebildet ist, wobei die automatische Tür aufweist:
- eine innere Tür (406);
- eine Abdeckung (402), welche die innere Tür (406) zumindest teilweise abdeckt;
- ein flexibles Element (404, 508) und
- Erkennungs- und Aktivierungsmittel (412, 500) umfassend:
o in Verbindung mit der Abdeckung (402) stehende Antriebsmittel (414, 514) und
o Initiationsmittel (418, 518) und eine mit der inneren Tür (406) in Verbindung stehende Erkennungstaste (416, 516),
wobei die Abdeckung in einem Abstand relativ zur inneren Tür versetzt ist, wenn die innere Tür und die Abdeckung in entgegengesetzte Richtungen für das Schließen bzw. Öffnen des Zugangs zur Kammer zusammen gleiten, wobei sich der Abstand zwischen der Abdeckung unter der inneren Tür in der Gleitrichtung befindet, um den Zugang zur Kammer zu schließen;
wobei das flexible Element:
- die innere Tür und die Abdeckung derart verbindet, dass sich die Abdeckung in dem versetzten Abstand relativ zur inneren Tür befindet;
- ermöglicht, dass der Abstand zwischen der Abdeckung und der inneren Tür verändert werden kann,
wobei das Detektierungs- und Antriebsmittel (412,500,414,514) dazu ausgebildet ist, den Zeitpunkt zu erkennen, wo sich der Abstand zwischen der inneren Tür (406) und der Abdeckung (402) vermindert, so dass die Initiationsmittel (418, 518) aktiviert werden, wenn die Abdeckung (402) derart nach unten geschoben wird, dass sich der Abstand zwischen der Abdeckung und der inneren Tür vermindert, was den Antriebsmitteln (414, 514) ermöglicht, mit der Erkennungstaste (416, 516) in Kontakt zu gelangen, und
wobei das Erkennungs- und Antriebsmittel ferner dazu ausgebildet ist, ein Signal zu senden, wenn sich der Abstand zwischen der inneren Tür und der Abdeckung vermindert, wobei das Signal einen Alarm auslöst, die Bewegung der Tür in der aktuellen Position der Tür stoppt und/oder die Tür in eine vorgegebene Position bewegt.

2. Vertikale Ballenpresse nach Anspruch 1, wobei das Erkennungs- und Antriebsmittel dazu ausgebildet ist, die Gleitrichtung zu verändern, wenn sich der Abstand zwischen der inneren Tür und der Abdeckung vermindert.

3. Vertikale Ballenpresse nach einem der vorgehenden Ansprüche, wobei das flexible Element ein Federelement ist.

4. Vertikale Ballenpresse nach einem der vorgehenden Ansprüche, wobei die innere Tür unter Verwendung eines flexiblen Elements mit der Abdeckung verbunden ist, wodurch die innere Tür während des Gleitens in die entgegengesetzten Richtungen relativ zur Abdeckung gewinkelt werden kann.

5. Vertikale Ballenpresse nach einem der vorgehenden Ansprüche, wobei zumindest ein Teil der Abdeckung oben auf zumindest einem Teil des flexiblen Elements ruht.

6. Vertikale Ballenpresse nach einem der vorgehenden Ansprüche, wobei die Abdeckung eine L-Form aufweist, indem sie den oberen und den vorderen Teil der inneren Tür abdeckt.

7. Vertikale Ballenpresse nach einem der vorgehenden Ansprüche, wobei die Abdeckung aus einer Platte hergestellt ist.

8. Vertikale Ballenpresse nach einem der vorgehenden Ansprüche, wobei die Abdeckung ein leichtes Material ist, wie beispielsweise Aluminium oder Kunststoff.

9. Vertikale Ballenpresse nach einem der vorgehenden Ansprüche, wobei die Abdeckung eine erste Oberfläche aufweist, wobei die breiteste Breite der ersten Oberfläche zumindest 25 %, 50 %, 75 %, 90 % oder 95 % der breitesten Breite der inneren Tür beträgt.

10. Vertikale Ballenpresse nach Anspruch 9, wobei die erste Oberfläche im Wesentlichen unverformbar ist.

11. Vertikale Ballenpresse nach Anspruch 9 oder 10, wobei die Abdeckung eine zweite Oberfläche aufweist, und wobei die erste Oberfläche in die Schließrichtung der automatischen Tür gerichtet ist, und die zweite Oberfläche in Richtung weg von der Kammer gerichtet ist.

12. Vertikale Ballenpresse nach einem der vorgehenden Ansprüche, wobei die innere Tür und die untere Tür aus Stahl hergestellt sind.

13. Vertikale Ballenpresse nach einem der vorgehenden Ansprüche, wobei die automatische Tür ferner eine untere Tür aufweist, vor welcher die innere Tür gleiten kann.

14. Vertikale Ballenpresse nach einem der vorgehenden Ansprüche, welche ferner einen in der Kammer angeordneten Presskolben aufweist, welcher Presskolben zum Komprimieren von Abfall ausgebildet ist.

## Revendications

1. Presse à balles verticale pour réaliser des balles d'un matériau de déchets, tel qu'en carton ou en plastique, par le compactage dudit matériau de déchets dans une chambre, ladite presse à balles verticale comprenant une porte automatique adaptée pour glisser automatiquement dans des directions opposées pour respectivement la fermeture et l'ouverture de l'accès à la chambre, ladite porte automatique comprenant:
- une porte intérieure (406);
- un couvercle (402) au moins partiellement couvrant ladite porte intérieure (406);
- un élément flexible (404, 508), et
- des moyens de détection et d'activation (412, 500) comprenant:
o des moyens d'actionneur (414, 514) en communication avec le couvercle (402), et
o des moyens d'initiation (418, 518), et un bouton de détection (416, 516) en communication avec la porte intérieure (406),
ledit couvercle étant déplacé à une distance par rapport à ladite porte intérieure lorsque ladite porte intérieure et ledit couvercle glissent ensemble dans des directions opposées pour respectivement fermer et ouvrir l'accès à la chambre, ladite distance entre ledit couvercle et ladite porte intérieure étant dans ladite direction de glissement pour fermer l'accès à ladite chambre;
ledit élément flexible:
- relie ladite porte intérieure et ledit couvercle si bien que ledit couvercle est à ladite distance déplacée par rapport à ladite porte intérieure;
- permet de changer ladite distance entre ledit couvercle et ladite porte intérieure,
dans lequel ledit moyen de détection et d'actionneur (412,500,414,514) est configuré de manière à détecter le moment où ladite distance entre ladite porte intérieure (406) et ledit couvercle (402) est diminuée, si bien que le moyen d'initiation (418, 518) est activé lorsque le couvercle (402) est poussé vers le bas si bien que la distance entre le couvercle et la porte intérieure est diminuée ce qui permet au moyen d'actionneur (414, 514) d'entrer en contact avec le bouton de détection (416, 516), et
dans lequel le moyen de détection et d'actionneur est en outre configuré de manière à transmettre un signal si ladite distance est diminuée entre ladite porte intérieure et ledit couvercle, ledit signal déclenchant un alarme, arrêtant le mouvement de la porte à la position actuelle de la porte et/ou déplaçant la porte à une position prédéterminée.

2. Presse à balles verticale selon la revendication 1, dans laquelle ledit moyen de détection et d'actionneur est adapté de manière à changer la direction de glissement lorsque ladite distance entre ladite porte intérieure et ledit couvercle est diminuée.

3. Presse à balles verticale selon l'une quelconque des revendications précédentes, dans laquelle ledit élément flexible est un élément à ressort.

4. Presse à balles verticale selon l'une quelconque des revendications précédentes, dans laquelle la porte intérieure est reliée audit couvercle au moyen d'un élément flexible permettant d'incliner ladite porte intérieure par rapport audit couvercle lors du glissement dans lesdites directions opposées.

5. Presse à balles verticale selon l'une quelconque des revendications précédentes, dans laquelle au moins une partie du couvercle repose sur la partie supérieure d'au moins une partie dudit élément flexible.

6. Presse à balles verticale selon l'une quelconque des revendications précédentes, dans laquelle ledit couvercle est en forme de L couvrant la partie supérieure et le front de ladite porte intérieure.

7. Presse à balles verticale selon l'une quelconque des revendications précédentes, dans laquelle ledit couvercle est réalisé à partir d'une plaque.

8. Presse à balles verticale selon l'une quelconque des revendications précédentes, dans laquelle ledit couvercle est un matériau en poids léger, tel qu'en aluminium ou en plastique.

9. Presse à balles verticale selon l'une quelconque des revendications précédentes, dans laquelle ledit couvercle comprend une première surface, dans laquelle la plus large largeur de la première surface est au moins 25%, 50%, 75%, 90% ou 95% de la plus large largeur de la porte intérieure.

10. Presse à balles verticale selon la revendication 9, dans laquelle ladite première surface est essentiellement non-déformable.

11. Presse à balles verticale selon la revendication 9 ou 10, dans laquelle ledit couvercle comprend une deuxième surface, et dans laquelle ladite première surface est tournée dans la direction de fermeture de la porte automatique, et ladite deuxième surface est détournée de la chambre.

12. Presse à balles verticale selon l'une quelconque des revendications précédentes, dans laquelle ladite porte intérieure et ladite porte inférieure sont réalisées en acier.

13. Presse à balles verticale selon l'une quelconque des revendications précédentes, dans laquelle la porte automatique comprend en outre une porte inférieure devant laquelle la porte intérieure peut glisser.

14. Presse à balles verticale selon l'une quelconque des revendications précédentes, comprenant en outre un bélier positionné à l'intérieur de ladite chambre, ledit bélier étant adapté de manière à compacter des déchets.
